# EUROPEAN PATENT APPLICATION

(11) **EP 4 788 005 A1**
(43) Date of publication of application: **05.08.2026**
(21) Application number: 23954185.7
(22) Date of filing: 26.09.2023
(51) Int. Cl.: H04W 72/0457, H04W 72/0453

(54) **TERMINAL, BASE STATION, AND COMMUNICATION METHOD**

(71) Applicant: NTT DOCOMO, INC., Tokyo 100-6150 (JP)
(72) Inventor: YOSHIOKA, Shohei, Tokyo 100-6150 (JP); OKANO, Mayuko, Tokyo 100-6150 (JP); NAGATA, Satoshi, Tokyo 100-6150 (JP)
(74) Representative: Hoffmann Eitle
(86) International application number: PCT/JP2023/035005
(87) International publication number: WO 2025/069209

(57) **Abstract**

A terminal includes: a control unit configured to set non-contiguous frequency-domain resources, the non-contiguous frequency-domain resources including one or more contiguous frequency-domain resources satisfying conditions that are defined or configured in advance; and a communication unit configured to communicate using the non-contiguous frequency-domain resources, and the conditions include a condition relating to at least one of a timing advance group, quasi co-location (QCL), a duplex mode, a numerology, a frequency band, a frequency range, or power control.

## Description

### FIELD OF THE INVENTION

The present invention relates to a terminal, a base station, and a communication method for use in a wireless communication system.

### BACKGROUND OF THE INVENTION

The 3rd generation partnership project (3GPP: registered trademark) is presently conducting studies on a wireless communication scheme known as "5G" or "New Radio" (NR) in order to achieve greater system capacity, faster data transmission speeds, and lower wireless latency (hereinafter this wireless communication scheme will be referred to as "NR"). For 5G, various wireless technologies and network architectures are under study to meet the requirement of achieving a throughput of 10 Gbps or more while minimizing the wireless latency to 1 ms or less (see, for example, Non-Patent Document 1 and Non-Patent Document 2).

As in LTE, NR continues to support the carrier aggregation (CA) function, which uses wideband to secure data resources. The carrier aggregation function secures wideband data resources by bundling multiple component carriers (CCs).

### RELATED-ART DOCUMENTS

### NON-PATENT DOCUMENTS

Non-Patent Document 1: 3GPP TS 38.300 V17.5.0 (2023-06)
Non-Patent Document 2: 3GPP TS 38.401 V17.5.0 (2023-06)

### SUMMARY OF THE INVENTION

### TECHNICAL PROBLEM

To enable more flexible and efficient resource allocation in carrier aggregation, various methods for aggregating contiguous frequency-domain resources and thereby forming non-contiguous frequency-domain resources efficiently are under study. However, unless it is clear what constraints apply when aggregating contiguous frequency-domain resources and forming non-contiguous frequency-domain resources, complexity of the technical specifications and implementation may become an issue.

The present invention has been made in view of the foregoing and aims to enable efficient use of non-contiguous frequency-domain resources in wireless communication.

### SOLUTION TO PROBLEM

The present disclosure provides a terminal. This terminal includes: a control unit configured to set non-contiguous frequency-domain resources, the non-contiguous frequency-domain resources including one or more contiguous frequency-domain resources satisfying conditions that are defined or configured in advance; and a communication unit configured to communicate using the non-contiguous frequency-domain resources, and the conditions include a condition relating to at least one of a timing advance group, quasi co-location (QCL), a duplex mode, a numerology, a frequency band, a frequency range, or power control.

### ADVANTAGEOUS EFFECTS OF INVENTION

The present disclosure enables efficient use of non-contiguous frequency-domain resources in wireless communication.

### BRIEF DESCRIPTION OF THE DRAWINGS

[FIG. 1] FIG. 1 is a diagram showing an example structure of a wireless communication system according to an embodiment of the present invention;
[FIG. 2] FIG. 2 is a diagram showing a first example structure of a virtual CC according to an embodiment of the present invention;
[FIG. 3] FIG. 3 is a diagram showing a second example structure of a virtual CC according to an embodiment of the present invention;
[FIG. 4] FIG. 4 is a diagram showing a third example structure of a virtual CC according to an embodiment of the present invention;
[FIG. 5] FIG. 5 is a diagram showing an example of division of a frequency range (FR3) according to an embodiment of the present invention;
[FIG. 6] FIG. 6 is a diagram showing an example functional structure of a base station 10 according to an embodiment of the present invention;
[FIG. 7] FIG. 7 is a diagram showing an example functional structure of a terminal 20 according to an embodiment of the present invention;
[FIG. 8] FIG. 8 is a diagram showing an example hardware structure of the base station 10 or the terminal 20 according to an embodiment of the present invention; and
[FIG. 9] FIG. 9 is a diagram showing an example structure of a vehicle 2001 according to an embodiment of the present invention.

### DETAILED DESCRIPTION OF THE PREFERRED EMBODIMENTS

Now, embodiments of the present invention will be described below with reference to the accompanying drawings. Note that the embodiments described below are only examples, and the applicability of the present invention is by no means limited to the following embodiments.

Existing techniques may be used as appropriate to operate the wireless communication system according to the following embodiments of the present invention. Examples of these existing techniques include, but are not limited to, existing LTE. Also, unless otherwise specified, the term "LTE" as used herein has a broad meaning, covering LTE-Advanced and systems that emerged after LTE-Advanced (for example, NR).

Also, in the following description of embodiments of the present invention, terms that are used in existing LTE will be used, including "synchronization signal (SS)", "primary SS (PSS)", "secondary SS (SSS)", "physical broadcast channel (PBCH)", "physical random access channel (PRACH)", "physical downlink control channel (PDCCH)", "physical downlink shared channel (PDSCH)", "physical uplink control channel (PUCCH)", "physical uplink shared channel (PUSCH)", and so forth. This is for ease of description, and signals, functions, and so forth that are the same or substantially the same as these may be referred to as by other names. Also, in NR, the above terms correspond to NR-SS, NR-PSS, NR-SSS, NR-PBCH, NR-PRACH, and so forth. Signals used in NR may not be always written with the prefix "NR-".

Also, in the following embodiments of the present invention, the duplex method may be time division duplex (TDD), frequency division duplex (FDD), or any other method (including, for example, flexible duplex).

Also, in the following embodiments of the present invention, when a radio parameter or the like is "configured", this may mean that a predetermined value is configured in advance (or "pre-configured") or mean that a radio parameter or the like that is reported from a base station 10 or a terminal 20 is configured.

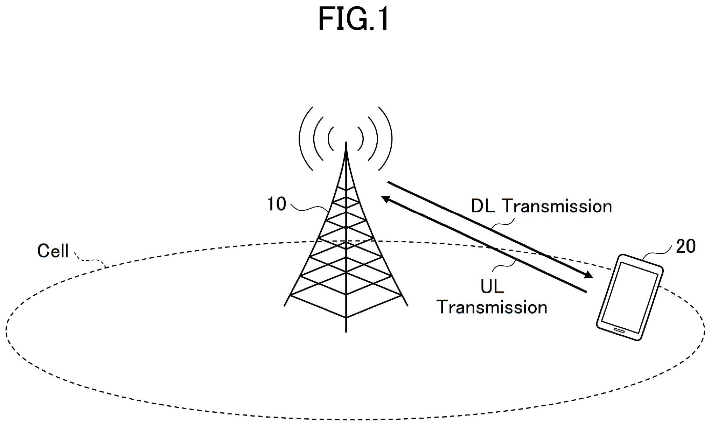

FIG. 1 is a diagram showing an example structure of a wireless communication system according to an embodiment of the present invention. As shown in FIG. 1, according to an embodiment of the present invention, a wireless communication system includes a base station 10 and a terminal 20. Although one base station 10 and one terminal 20 are shown in FIG. 1, this is just an example, and there may be two or more of each.

The base station 10 is a communication device that provides one or more cells and performs wireless communication with the terminal 20. Physical resources for radio signals are defined in the time domain and the frequency domain. Time domain resources may be indicated by the number of orthogonal frequency division multiplexing (OFDM) symbols, and frequency domain resources may be indicated by the number of subcarriers or resource blocks. The base station 10 transmits synchronization signals and system information to the terminal 20. The synchronization signals include, for example, NR-PSS and NR-SSS. The system information is transmitted, for example, on NR-PBCH, and is also referred to as "broadcast information". The synchronization signals and system information may be referred to as "SS/PBCH block" (SSB). Referring to FIG. 1, the base station 10 transmits control signals or data to the terminal 20 via downlink (DL) and receives control signals or data from the terminal 20 via uplink (UL). Both the base station 10 and the terminal 20 can transmit and receive signals by using beamforming. Also, both the base station 10 and the terminal 20 can employ multiple-input multiple-output (MIMO) communication on DL or UL. Also, the base station 10 and the terminal 20 may both communicate via a secondary cell (SCell) and a primary cell (PCell) in carrier aggregation (CA). Furthermore, in the event dual connectivity (DC) is employed, the terminal 20 may communicate via a primary cell of the base station 10 and a primary secondary cell group cell (primary SCG cell or "PSCell") of another base station 10.

The terminal 20 is a communication device with a wireless communication function, such as a smartphone, a mobile phone, a tablet, a wearable terminal, or a machine-to-machine (M2M) communication module. As shown in FIG. 1, the terminal 20 receives control signals or data from the base station 10 via DL and transmits control signals or data to the base station 10 via UL, thereby using various communication services provided by the wireless communication system. Also, the terminal 20 receives various reference signals transmitted from the base station 10 and measures the quality of propagation paths based on the result of receiving these reference signals.

In addition, LTE and NR support a carrier aggregation function to use wideband reserve data resources. Carrier aggregation makes it possible to reserve wideband data resources by bundling multiple component carriers. For example, a 100 MHz band can be used by bundling multiple 20 MHz bands.

In existing carrier aggregation, data resources need to be scheduled for each of multiple component carriers that are bundled, resulting in significant resource allocation overhead.

So, this specification will describe: a method for allocating resources in scheduling units defined in different granularities than component carriers; and a terminal that allocates resources in scheduling units defined in different granularities than component carriers.

The framework for scheduling or aggregating resources in different granularities than component carriers will be referred to as "frequency fragmentation". Note that a "component carrier" may refer to a set of frequency-domain resources (an "actual CC", which will be described in the following description) corresponding to existing scheduling units, or a "component carrier" may refer to a set of frequency-domain resources (a "virtual CC", which will be described in the following description) in frequency fragmentation.

The type of carrier aggregation in which resources are aggregated in different granularities than component carriers is herein referred to as "non-contiguous carrier aggregation".

Also, the type of scheduling in which, when carrier aggregation (non-contiguous carrier aggregation) is employed, resources are scheduled in different granularities than component carriers is herein referred to as "non-contiguous scheduling".

The "units defined in different granularities than component carriers" include virtual CCs, bandwidth parts (BWPs), physical resource blocks (PRBs), PRB sets, and so forth. Assuming that multiple component carriers are present, a virtual CC refers to a carrier set bundling all or part of the frequency-domain resources included in respective component carriers. For example, a virtual CC may be comprised of multiple BWPs.

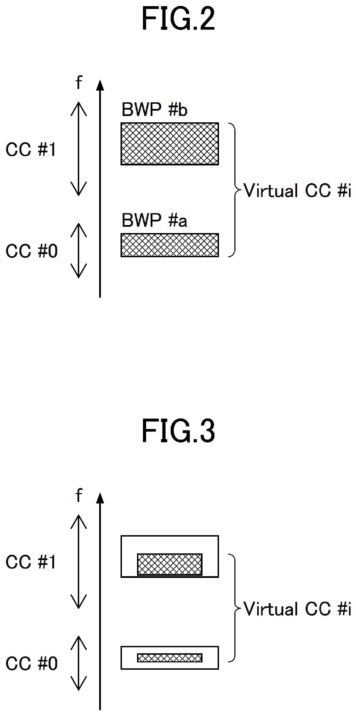

FIG. 2 is a first diagram showing an example structure of a virtual CC according to an embodiment of the present invention. Referring to FIG. 2, where multiple component carriers (CC #0 and CC #1) are present, a virtual CC #i is a carrier set formed by bundling a BWP #a and a BWP #b together, which are included in respective component carriers.

A virtual CC may also be comprised of multiple PRBs or a PRB set.

FIG. 3 is a second diagram showing an example structure of a virtual CC according to an embodiment of the present invention. Referring to FIG. 3, where multiple component carriers (CC #0 and CC #1) are present, a virtual CC #i is a carrier set formed by bundling multiple PRBs together, which are included in respective component carriers. Note that these multiple PRBs, or a PRB set, may be included in one BWP or in multiple BWPs.

In the following description, a CC that is not bundled yet will be referred to as an "actual CC", and a CC that is bundled will be referred to as a "virtual CC" or a "nominal CC". These names are only examples. Furthermore, actual CCs may be any unit of frequency-domain resources and need not be defined or configured as CCs. Virtual CCs may be defined and configured as CCs.

Furthermore, virtual CCs may be used in, for example, channel mapping, scheduling, retransmission control (such as hybrid automatic repeat request (HARQ) control), configuration, and other processes, in the same manner as are existing single CCs.

Furthermore, actual CCs may be interpreted as "contiguous frequency-domain resources", and virtual CCs as "non-contiguous frequency-domain resources".

The terminal 20 may transmit terminal capability information that indicates the structure of virtual CCs to the base station 10. This terminal capability information indicating the structure of virtual CCs may be, for example, information indicating that a virtual CC is comprised of multiple BWPs, information indicating that a virtual CC is comprised of multiple PRBs, and so forth.

Furthermore, the terminal capability information indicating the structure of virtual CCs may be information indicating that the terminal 20 supports a virtual CC comprised of multiple BWPs and a virtual CC comprised of multiple PRBs.

The terminal 20 may transmit terminal capability information that indicates the structure of virtual CCs to the base station 10. This terminal capability information indicating the structure of virtual CCs may be, for example, information indicating that a virtual CC is comprised of multiple BWPs, information indicating that a virtual CC is comprised of multiple PRBs, and so forth.

Furthermore, the terminal capability information indicating the structure of virtual CCs may be information indicating that the terminal 20 supports a virtual CC comprised of multiple BWPs and a virtual CC comprised of multiple PRBs.

The terminal 20 may assume that the index for identifying each individual virtual CC is configured by the base station 10 through radio resource control (RRC). The terminal 20 may also assume that the index identifying a virtual CC is the minimum value (for example, i = 0 in FIG. 2 or FIG. 3) or the maximum value (for example, i = 1 in FIG. 2 or FIG. 3) among the respective indices of component carriers included in that virtual CC.

The terminal 20 may assume that the scheduling units in non-contiguous scheduling are reported by using, for example:
(i) virtual CC indices;
(ii) indices of multiple component carriers + indices of multiple BWPs;
(iii) indices of multiple component carriers + indices of multiple PRBs or PRB sets; and
(iv) indices of multiple component carriers + indices of multiple BWPs + indices of multiple PRBs or PRB sets.

The terminal 20 may assume that virtual CCs, BWPs, PRBs, or PRB sets serve as resource units in carrier aggregation.

The above-described operation enables resource allocation in scheduling units defined in different granularities than component carriers.

### (Embodiments)

Constraints on the use of non-contiguous frequency-domain resources in wireless communications will be described with the following embodiments.

When a virtual CC is comprised of one or more actual CCs, the actual CC(s) must satisfy a predetermined condition (constraint). The base station 10 and the terminal 20 form virtual CCs taking into account the predetermined condition (constraint).

Information about the predetermined condition (constraint) may be defined in technical specifications.

The base station 10 may report information about the constraint to the terminal 20 using a common signal.

Alternatively, the terminal 20 may report information about the constraint to the base station 10 as part of its terminal capabilities (UE capabilities). The base station 10, having learned the terminal capabilities of the terminal 20, may provide the terminal 20 with information about the constraint as a signal exclusively addressing the terminal 20 (UE-specific signal).

### (Embodiment 1) TAG

This embodiment may assume that only actual CCs which are included in the same timing advance group (TAG) and/or to which the same timing advance sequence is applied can constitute the same virtual CC together. The terminal 20 may communicate with the base station 10 using this virtual CC.

That is, a single (that is, a common) specific configuration and/or command related to timing advance may be applied to all the actual CCs constituting the virtual CC.

This embodiment may also support a case in which a virtual CC is comprised of actual CCs which are included in varying TAGs and/or to which varying timing advance sequences are applied. Terminal capability signaling (UE capability signaling) indicating that the terminal 20 supports this structure/configuration may be specified and reported from the terminal 20 to the base station 10.

### (Embodiment 2) QCL (quasi co-location)

### (Embodiment 2a)

This embodiment may assume that whether actual CCs are QCL actual CCs (quasi co-located actual CCs) is determined, and that only QCL actual CCs can constitute the same virtual CC. The terminal 20 may communicate with the base station 10 using this virtual CC.

A single (that is, a common) configuration and/or indication related to beam change may be applied to all the actual CCs constituting the virtual CC.

This embodiment may also support a case in which a virtual CC is comprised of non-QCL actual CCs. Terminal capability signaling (UE capability signaling) indicating that the terminal 20 supports this structure/configuration may be specified and reported from the terminal 20 to the base station 10.

### (Embodiment 2b)

This embodiment may assume that only actual CCs that can handle at least one of: configuration/indication/operation related to handover; configuration/indication/operation related to measurement and reporting; and configuration/indication/operation related to radio link monitoring (RLM) and radio link failures (RLF) can constitute the same virtual CC together. Here, the expression "configuration/indication/operation" may include all or at least one of configuration, indication, and operation. The terminal 20 may communicate with the base station 10 using this virtual CC.

A single (that is, a common) configuration/indication/operation may be applied to all the actual CCs constituting the virtual CC.

This embodiment may support a case in which a virtual CC is comprised of actual CCs that handle configuration/indication/operation separately. Terminal capability signaling (UE capability signaling) indicating that the terminal 20 supports this structure/configuration may be specified and reported from the terminal 20 to the base station 10.

### (Embodiment 3) Duplex Config

### (Embodiment 3a)

This embodiment may assume that only actual CCs where the same duplex mode (full-duplex communication mode, etc.) is configured or indicated can constitute the same virtual CC together. The terminal 20 may communicate with the base station 10 using this virtual CC.

That is, a single (that is, a common) duplex mode configuration and/or indication may be applied to all the actual CCs constituting the virtual CC.

The duplex mode may be time division duplex (TDD), frequency division duplex (FDD), sub-band full duplex (SBFD), or full duplex (FD), or other modes of communication may be used. Note that SBFD and FD may be applied to the base station 10 alone or to the terminal 20 alone. For example, the terminal 20 may employ TDD or FDD when communicating with the base station 10. For example, the base station 10 may employ TDD or FDD when communicating with the terminal 20. The same applies to embodiments 3 below.

This embodiment may support a case in which a virtual CC is comprised of actual CCs where varying duplex modes are configured/indicated. Terminal capability signaling (UE capability signaling) indicating that the terminal 20 supports this structure/configuration may be specified and reported from the terminal 20 to the base station 10.

### (Embodiment 3b)

This embodiment may assume that only actual CCs where a specific combination of duplex modes is configured can constitute the same virtual CC together. The terminal 20 may communicate with the base station 10 using this virtual CC.

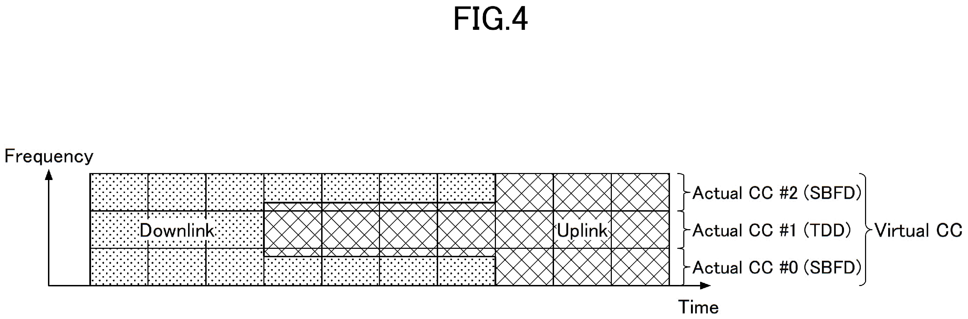

FIG. 4 shows a third example structure of a virtual CC according to an embodiment of the present invention. In FIG. 4, for example, an actual CC #0 may use SBFD, an actual CC #1 may use TDD, and an actual CC #2 may use SBFD, and all of these actual CCs may constitute the same virtual CC together.

A specific combination or combinations of duplex modes that the terminal 20 supports may be reported from the terminal 20 to the base station 10 and/or from the base station 10 to the terminal 20.

### (Embodiment 3c)

Actual CCs included in a particular virtual CC may be different types of resources, such as downlink (DL) resources, uplink (UL) resources, and flexible resources. "Flexible" resources may refer to resources that can be used on both DL and UL, depending on scheduling. Either of the following two methods may be used here:

### (First method)

One of the following two methods may be used first.

### (Second method)

Multiple methods are used at the same time.

For example, whether to use the first method or the second method may be determined based on a configuration of the base station 10. Alternatively, whether to use the first method or the second method may be determined based on the frequency gap between actual CCs. Alternatively, whether to use the first method or the second method may be determined based on a terminal capability (UE capability).

### (Embodiment 3d)

Sub-band full duplex (SBFD) may be implemented in a virtual CC using one of the following methods:

### (First method)

A virtual CC may be configured such that each individual actual CC employs TDD and/or FDD and the virtual CC employs SBFD.

### (Second method)

A virtual CC may be configured such that each individual actual CC employs SBFD.

In this case, SBFD has only to be configured such that, inside an entire virtual CC, uplink (UL) resources are positioned between downlink (DL) resources (that is, in the frequency domain, every UL resource is positioned between DL resources). In the actual CCs, on the other hand, uplink resources need not be positioned between downlink resources.

### (Embodiment 4) Numerology

### (Embodiment 4a)

This embodiment may assume that only actual CCs with the same numerology or numerologies can constitute the same virtual CC together. The terminal 20 may communicate with the base station 10 using this virtual CC.

That is, a single (that is, a common) numerology-related configuration and/or command may be applied to all the actual CCs constituting the virtual CC.

This embodiment may also support a case in which a virtual CC is comprised of actual CCs with varying numerologies. Terminal capability signaling (UE capability signaling) indicating that the terminal 20 supports this structure/configuration may be specified and reported from the terminal 20 to the base station 10.

### (Embodiment 4b)

This embodiment may assume that only actual CCs where a specific combination of numerologies is configured can constitute the same virtual CC together. The terminal 20 may communicate with the base station 10 using this virtual CC.

For example, the terminal 20 may assume that only actual CCs where the combination of 15-kHz and 30-kHz subcarrier spacings (SCS) is configured can constitute the same virtual CC together. For example, the terminal 20 may assume that actual CCs where the combination of 15-kHz and 120-kHz subcarrier spacings is configured do not constitute the same virtual CC together. Furthermore, the combinations of numerologies that the terminal 20 supports may be reported from the terminal 20 to the base station 10 and/or from the base station 10 to the terminal 20.

### (Embodiment 4c)

Varying numerologies may be applied between actual CCs included in a particular virtual CC; the virtual CC may operate in accordance with one actual CC's numerology or numerologies. Alternatively, actual CCs included in the same virtual CC may operate in accordance with their respective numerologies.

### (Embodiment 5) Band/band combination

### (Embodiment 5a)

This embodiment may assume that only actual CCs included in the same band can constitute the same virtual CC together. The terminal 20 may communicate with the base station 10 using this virtual CC.

A virtual CC may be comprised of actual CCs belonging in different bands. Terminal capability signaling (UE capability signaling) indicating that the terminal 20 supports this structure/configuration may be specified and reported from the terminal 20 to the base station 10.

### (Embodiment 5b)

This embodiment may assume that only actual CCs that support a specific combination or combinations of frequency bands (or "band combination(s)") can constitute the same virtual CC together. For example, actual CCs corresponding to the combination of a frequency band A and a frequency band B can constitute the same virtual CC. The terminal 20 may communicate with the base station 10 using this virtual CC. For example, actual CCs corresponding to the combination of frequency band A and a frequency band C cannot constitute the same virtual CC together; the terminal 20 may assume that no such virtual CC will be configured.

### (Embodiment 5c)

This embodiment may assume that only actual CCs positioned inside a certain distance on the frequency axis can constitute the same virtual CC together. Here, the distance may be specified in technical specifications, indicated in a common signal (common signaling) from the base station 10, or determined based on terminal capabilities (UE capabilities). The terminal 20 may communicate with the base station 10 using this virtual CC.

### (Embodiment 5-1) Licensed/unlicensed band

This embodiment may assume that only actual CCs with the same frequency band type (licensed band or unlicensed band) can constitute the same virtual CC together. The terminal 20 may communicate with the base station 10 using this virtual CC.

In addition, this embodiment may support a cast in which a virtual CC is comprised of actual CCs belonging in different types of frequency bands (such as a licensed band and an unlicensed band). Terminal capability signaling (UE capability signaling) indicating that the terminal 20 supports this configuration/structure may be reported from the terminal 20 to the base station 10.

### (Embodiment 6) Frequency range

### (Embodiment 6a)

This embodiment may assume that only actual CCs included in the same frequency range (FR) can constitute the same virtual CC together. The terminal 20 may communicate with the base station 10 using this virtual CC. The terminal 20 may additionally support a case in which a virtual CC is comprised of actual CCs belonging in different frequency ranges. Terminal capability signaling (UE capability signaling) indicating that the terminal 20 supports this configuration/structure may be reported from the terminal 20 to the base station 10.

### (Embodiment 6b)

This embodiment may assume that only actual CCs corresponding to a specific combination or combinations of frequency ranges (or "FR combination(s)") can constitute the same virtual CC together. The terminal 20 may communicate with the base station 10 using this virtual CC. For example, only actual CCs corresponding to a specific combination of frequency ranges such as {FR1, FR3} can constitute the same virtual CC together, and actual CCs corresponding to the frequency range combination {FR3, FR2} cannot constitute the same virtual CC together. Furthermore, the combination(s) of frequency ranges (FR combination(s)) that the terminal 20 supports may be reported from the terminal 20 to the base station 10 and/or from the base station 10 to the terminal 20.

### (Embodiment 6c)

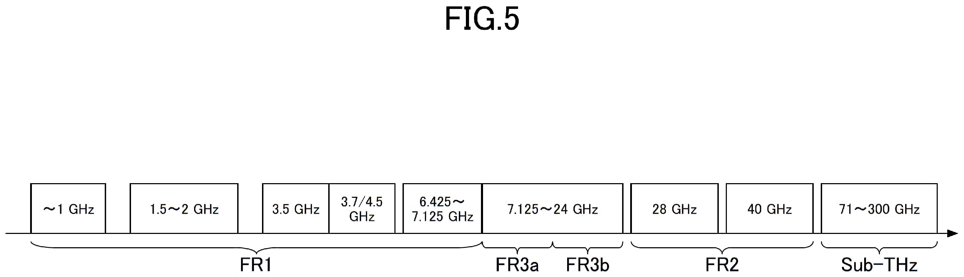

A frequency range (e.g., FR3) may be divided into multiple frequency ranges, and embodiment 6b may be applied to the divided frequency ranges. FIG. 5 shows an example of division of a frequency range (FR3) according to an embodiment of the present invention. As shown in FIG. 5, FR3, which is the frequency range from 7.125 GHz to 24 GHz, is divided into two frequency ranges, FR3a and FR3b. For example, only actual CCs corresponding to the frequency range combination {FR1, FR3a} or the frequency range combination {FR3b, FR2} can constitute the same virtual CC together, and actual CCs corresponding to the frequency range combination {FR1, FR3b} cannot constitute the same virtual CC together. Furthermore, the FR combination(s) that the terminal 20 supports may be reported from the terminal 20 to the base station 10 and/or from the base station 10 to the terminal 20.

The position of division may be specified in technical specifications or may be configured by the base station 10 and/or by the terminal 20. For example, the terminal 20 may determine, implicitly, the position of division based on a synchronization signal (SS) transmitted from the base station 10. Alternatively, the position of division may be reported to the terminal 20 in, for example, broadcast information (master information block (MIB) and/or system information block (SIB)), downlink control information (DCI), medium access control control element (MAC-CE), and so forth, transmitted from the base station 10.

### (Embodiment 6d)

This embodiment may assume that the actual CCs that can constitute the same virtual CC together change depending on which frequency ranges are used together. The terminal 20 may communicate with the base station 10 using this virtual CC.

For example, this embodiment may assume that, in the event an FR1, an FR3a, and an FR3b are used at the same time, actual CCs belonging in {FR1, FR3a, FR3b} can constitute the same virtual CC together.

Alternatively, for example, this embodiment may assume that, in the event FR1, FR3a, FR3b, and FR2 are used at the same time, actual CCs belonging in {FR1, FR3a} can constitute the same virtual CC together and actual CCs belonging in {FR3b, FR2} can constitute the same virtual CC together. In this case, it is also assumed that actual CCs belonging in {FR1, FR3a, FR3b, FR2} cannot constitute the same virtual CC together.

### (Embodiment 7) RF (Radio Frequency)

This embodiment may assume that only actual CCs to which the same power control sequence is applied can constitute the same virtual CC together. The terminal 20 may communicate with the base station 10 using this virtual CC.

That is, at least one of a specific power control-related definition, configuration, and command (for example, maximum transmission power control (TPC) command) may be applied in common to all of the actual CCs included in the same virtual CC.

Furthermore, this embodiment may support a case in which a virtual CC is comprised of actual CCs to which varying power control sequences are applied. Terminal capability signaling (UE capability signaling) indicating that the terminal 20 supports this structure/configuration may be specified and reported from the terminal 20 to the base station 10.

The above-described embodiments thus enable efficient use of non-contiguous frequency-domain resources in wireless communication. Furthermore, by carrying out communication based exclusively on virtual CC structures that are feasible on device implementations of the base station 10 and the terminal 20, it is possible to avoid making the technical specifications and implementations of the base station 10 and the terminal 20 complex, thereby achieving improved flexibility.

### (Device Structures)

Next, example functional structures of the base station 10 and the terminal 20 having functions to implement the above-described processes and operations will be described. The base station 10 and the terminal 20 have functions to carry out the above-described embodiments. However, both the base station 10 and the terminal 20 may have only some of the functions of the embodiments.

### <Base Station 10>

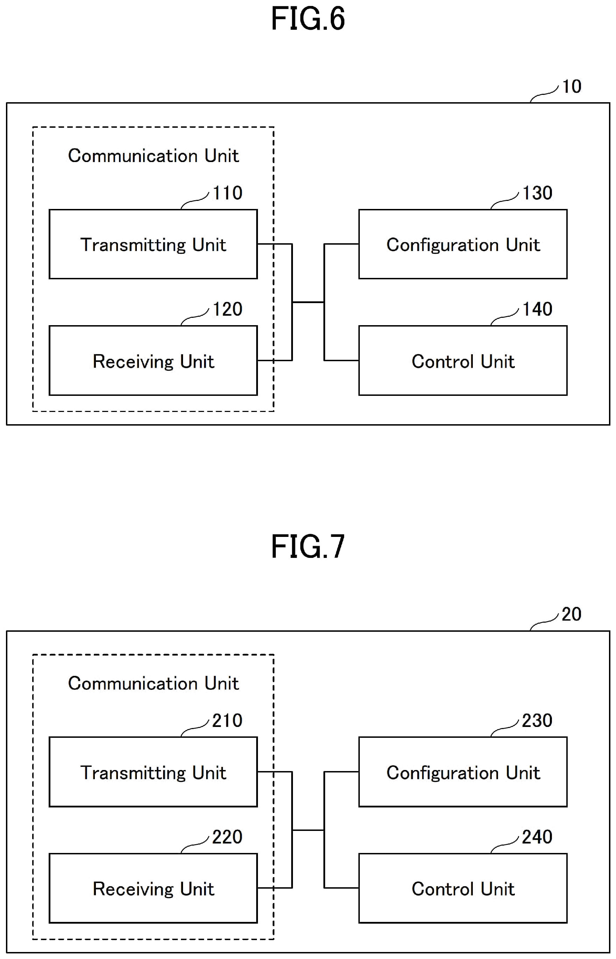

FIG. 6 is a diagram showing an example functional structure of a base station 10 according to an embodiment of the present invention. As shown in FIG. 6, the base station 10 has a transmitting unit 110, a receiving unit 120, a configuration unit 130, and a control unit 140. The functional structure shown in FIG. 6 is simply an example. As long as the operations of the above embodiments of the present invention can be implemented, any functional categories and any functional unit names may be used. Furthermore, the transmitting unit 110 and the receiving unit 120 may be collectively referred to as a "communication unit."

The transmitting unit 110 has, for example, a function to generate signals to be transmitted to the terminal 20 or other network nodes and transmit the signals via a wireless connection. The transmitting unit 110 also transmits inter-network node messages to other network nodes. The receiving unit 120 has, for example, a function to receive various signals transmitted from the terminal 20 and acquire, for example, higher layer information from the received signals. Also, the transmitting unit 110 has a function to transmit NR-PSS, NR-SSS, NR-PBCH, DL/UL control signals, etc., to the terminal 20. Also, the receiving unit 120 receives inter-network node messages from other network nodes.

The configuration unit 130 stores configuration information that is set in advance, as well as various configuration information to be transmitted to the terminal 20. The contents of the configuration information include, for example, information about non-contiguous frequency resources.

The control unit 140 controls, for example, non-contiguous frequency resources, as has been described with the above embodiments. The functional unit related to signal transmission in the control unit 140 may be included in the transmitting unit 110, and the functional unit related to signal reception in the control unit 140 may be included in the receiving unit 120.

### <Terminal 20>

FIG. 7 is a diagram showing an example functional structure of a terminal 20 according to an embodiment of the present invention. As shown in FIG. 7, the terminal 20 has a transmitting unit 210, a receiving unit 220, a configuration unit 230, and a control unit 240. The functional structure shown in FIG. 7 is simply an example. As long as the operations of the above embodiments of the present invention can be implemented, any functional categories and any functional unit names may be used.

The transmitting unit 210 creates transmission signals from transmission data and transmits them via a wireless connection. The receiving unit 220 receives various signals via a wireless connection and obtains higher layer signals from the physical layer signals received. The receiving unit 220 also has a function to receive NR-PSS, NR-SSS, NR-PBCH, DL/UL/SL control signals, etc., transmitted from the base station 10. Furthermore, for example, in D2D communication, the transmitting unit 210 transmits a physical sidelink control channel (PSCCH), a physical sidelink shared channel (PSSCH), a physical sidelink discovery channel (PSDCH), a physical sidelink broadcast channel (PSBCH), etc., to other terminals 20, and the receiving unit 220 receives the PSCCH, PSSCH, PSDCH, PSBCH, etc., from other terminals 20.

The configuration unit 230 stores various types of configuration information received from the base station 10 by the receiving unit 220. The configuration unit 230 also stores pre-configured configuration information. The content of the configuration information includes, for example, information about non-contiguous frequency resources.

The control unit 240 executes control to implement the functions described with the above embodiments. Also, the control unit 240 executes control related to non-contiguous frequency resources as has been described with the above embodiments. The functional unit related to signal transmission in the control unit 240 may be included in the transmitting unit 210, and the functional unit related to signal reception in the control unit 240 may be included in the receiving unit 220.

### (Hardware Structures)

The block diagrams (FIG. 6 and FIG. 7) used in the description of the above embodiments illustrate blocks of functional units. These functional blocks (components) are implemented by any combination of hardware and/or software. In addition, the method of implementing each functional block is not particularly limited. That is, each functional block may be implemented by using a single device that is physically or logically combined, or two or more devices that are physically or logically separate may be directly or indirectly connected (for example, by using a cable, radio, etc.), and each functional block may be implemented using these multiple devices. The functional blocks may be implemented by combining software with the device or devices.

The functions include, but are not limited to, judgment, determination, decision, calculation, computation, processing, derivation, research, search, verification, reception, transmission, output, access, resolution, selection, choosing, establishment, comparison, assumption, assumption, deeming, broadcasting, notifying, communicating, forwarding, configuring, reconfiguring, allocating, mapping, and assigning. For example, a functional block (component) that performs a transmission function is referred to as a "transmitting unit" or a "transmitter." In either case, as described above, the method of implementation is not particularly limited.

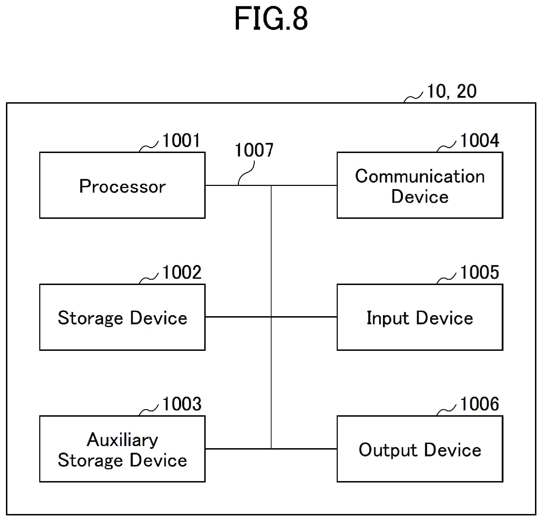

For example, the base station 10, the terminal 20, and so forth according to an embodiment of the present disclosure may function as a computer for processing the wireless communication method of the present disclosure. FIG. 8 is a diagram that illustrates an example hardware structure of the base station 10 and the terminal 20 according to an embodiment of the present disclosure. The network nodes may be structured the same or substantially the same as the base station 10. The USIM may be structured the same or substantially the same as the terminal 20. The base station 10 and the terminal 20 described above may be physically configured as a computer device including a processor 1001, a storage device 1002, an auxiliary storage device 1003, a communication device 1004, an input device 1005, an output device 1006, a bus 1007, and the like.

In the following description, the term "device" can be read as circuit, apparatus, unit, and so forth. The hardware structure of the base station 10 and the terminal 20 may be configured to include one or more of the devices illustrated in the drawings or may be configured without some of the devices.

The functions of the base station 10 and the terminal 20 are realized by performing operations by the processor 1001 by reading predetermined software (programs) on hardware such as the processor 1001 and the storage device 1002, and controlling communication by the communication device 1004 and controlling at least one of reading and writing of data in the storage device 1002 and the auxiliary storage device 1003.

The processor 1001 operates, for example, an operating system to control the entire computer. The processor 1001 may be comprised of a central processing unit (CPU) including an interface with peripheral devices, a control device, an arithmetic device, a register, and the like. For example, the above-described control unit 140, control unit 240, and the like may be implemented by the processor 1001.

The processor 1001 reads out programs (program codes), software modules, data, or the like from at least one of the auxiliary storage device 1003 and the communication device 1004 to the storage device 1002, and performs various processes in accordance with the above. As for the programs, programs that cause the computer to execute at least part of the operations described in the above embodiment may be used. For example, the control unit 140 of the base station 10 illustrated in FIG. 6 may be stored in the storage device 1002 and implemented by control programs that operate on the processor 1001. For example, the control unit 240 of the terminal 20 illustrated in FIG. 7 may be stored in the storage device 1002 and implemented by control programs that operate on the processor 1001. Although the foregoing processes have been described and executed by one processor 1001, they may be executed simultaneously or sequentially by two or more processors 1001. The processor 1001 may be implemented by one or more chips. The programs may be transmitted from the network via a telecommunication line.

The storage device 1002 is a computer-readable recording medium and may be comprised of at least one of, for example, a read-only memory (ROM), an erasable programmable ROM (EPROM), an electrically erasable programmable ROM (EEPROM), a random access memory (RAM), and the like. The storage device 1002 may be referred to as a register, cache, main memory (main storage device), or the like. The storage device 1002 can store programs (program codes), software modules, and so forth, executable to implement the communication method according to the embodiment of the present disclosure.

The auxiliary storage device 1003 is a computer-readable recording medium and may be comprised of at least one of an optical disk, such as a compact disc ROM (CD-ROM), a hard disk drive, a flexible disk, a magneto-optical disk (for example, a compact disc, a digital versatile disc, a Blu-ray disc (registered trademark), etc.), a smart card, a flash memory (for example, a card, a stick, a key drive), a floppy disk (registered trademark), a magnetic strip, and the like. The storage medium described above may be, for example, a database, a server, or other suitable medium that includes at least one of a storage device 1002 and an auxiliary storage device 1003.

The communication device 1004 is hardware (a transceiving device) for performing communication between computers via at least one of a wired network and a wireless network and is also referred to as a "network device," a "network controller," a "network card," a "communication module," or the like. The communication device 1004 may be comprised of a high frequency switch, a duplexer, a filter, a frequency synthesizer, or the like, for example, to implement at least one of frequency division duplex (FDD) and time division duplex (TDD). For example, the transmitting/receiving antenna, the amplifier unit, the transceiving unit, the transmission line interface, and the like may be implemented by the communication device 1004. The transceiving unit may be physically or logically isolated, respective implementations of a transmitting unit and a receiving unit.

The input device 1005 is an input device (for example, a keyboard, a mouse, a microphone, a switch, a button, a sensor, etc.) that accepts external input. The output device 1006 is an output device (for example, a display, a speaker, an LED lamp, etc.) that implements external output. The input device 1005 and the output device 1006 may have an integral structure (for example, a touch panel).

Each device, such as the processor 1001 and the storage device 1002, is connected by a bus 1007 for communicating information. The bus 1007 may be constructed using a single bus or may be constructed using different buses between devices.

The base station 10 and the terminal 20 may also include hardware such as a microprocessor, a digital signal processor (DSP), an application-specific integrated circuit (ASIC), a programmable logic device (PLD), a field programmable gate array (FPGA), and so forth, and some or all of the functional blocks may be implemented by the hardware. For example, the processor 1001 may be implemented by using at least one of these hardware components.

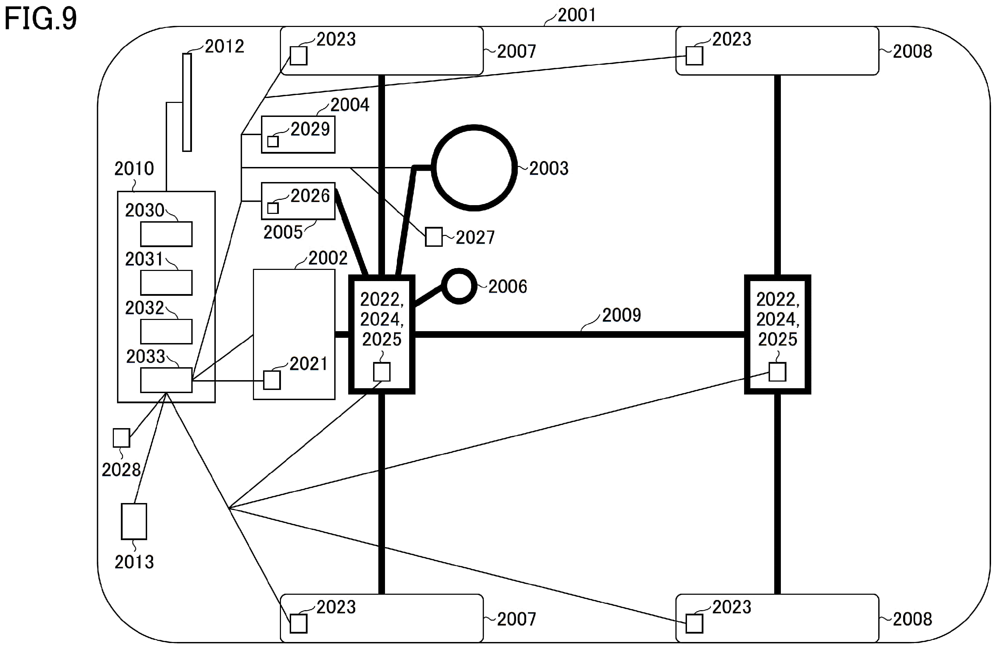

FIG. 9 shows an example structure of a vehicle 2001. As shown in FIG. 9, the vehicle 2001 includes a drive unit 2002, a steering unit 2003, an accelerator pedal 2004, a brake pedal 2005, a shift lever 2006, a front wheel 2007, a rear wheel 2008, an axle 2009, an electronic control unit 2010, various sensors 2021 to 2029, an information service unit 2012, and a communication module 2013. The embodiments and examples described in the present disclosure may be applied to a communication device mounted in the vehicle 2001, and may be applied to, for example, the communication module 2013.

The drive unit 2002 may include, for example, an engine, a motor, and a hybrid of an engine and a motor. The steering unit 2003 includes at least a steering wheel and is configured to steer at least one of the front wheel and the rear wheel, based on the operation of the steering wheel operated by the user.

The electronic control unit 2010 includes a microprocessor 2031, a memory (ROM, RAM, etc.) 2032, and a communication port (IO port) 2033. The electronic control unit 2010 receives signals from the sensors 2021 to 2029 provided in the vehicle 2001. The electronic control unit 2010 may be referred to as an "electronic control unit" (ECU).

The signals from the sensors 2021 to 2029 include a current signal from a current sensor 2021 that senses the current of the motor, a front or rear wheel rotation speed signal acquired by a rotation speed sensor 2022, a front or rear wheel air pressure signal acquired by an air pressure sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, a shift lever operation signal acquired by a shift lever sensor 2027, and a detection signal, acquired by an object detection sensor 2028, for detecting an obstacle, a vehicle, a pedestrian, and the like.

The information service unit 2012 includes various devices for providing various information such as driving information, traffic information, and entertainment information, including a car navigation system, an audio system, a speaker, a television, and a radio, and one or more ECUs that control these devices. The information service unit 2012 provides various multimedia information and multimedia services to the occupants of the vehicle 2001 by using information obtained from external devices through the communication module 2013 or the like. The information service unit 2012 may include an input device (for example, a keyboard, a mouse, a microphone, a switch, a button, a sensor, a touch panel, etc.) that accepts external inputs, and may also include an output device (for example, a display, a speaker, an LED lamp, a touch panel, etc.) that executes external outputs.

A driver assistance system unit 2030 includes: various devices for providing functions of preventing accidents and reducing the driver's burden of driving, such as a millimeter wave radar, a light detection and ranging (LiDAR) system, a camera, a positioning locator (for example, GNSS), map information (for example, high definition (HD) map, autonomous vehicle (AV) map, etc.), a gyro system (for example, an inertial measurement unit (IMU), an inertial navigation system (INS), etc.), an artificial intelligence (AI) chip, and an AI processor; and one or more ECUs that control these devices. In addition, the driver assistance system unit 2030 transmits and receives various information via the communication module 2013 to implement a driver assistance function or an autonomous driving function.

The communication module 2013 may communicate with the microprocessor 2031 and components of the vehicle 2001 via a communication port. For example, the communication module 2013 transmits and receives data via a communication port 2033, to and from the drive unit 2002, the steering unit 2003, the accelerator pedal 2004, the brake pedal 2005, the shift lever 2006, the front wheel 2007, the rear wheel 2008, the axle 2009, the microprocessor 2031, the memory (ROM, RAM, etc.) 2032 in the electronic control unit 2010, and the sensors 2021 to 29 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through wireless communication. The communication module 2013 may be internal or external to the electronic control unit 2010. The external devices may include, for example, a base station, a mobile station, or the like.

The communication module 2013 may transmit at least one of: signals input to the electronic control unit 2010 from the sensors 2021 to 2029; information obtained based on these signals; and information based on inputs from the outside (user) obtained via the information service unit 2012, to external devices via wireless communication. The electronic control unit 2010, the sensors 2021 to 2029, the information service unit 2012, and the like may be referred to as an "input unit" that accepts inputs. For example, PUSCH transmitted by the communication module 2013 may include information that is based on an input such as one described above.

The communication module 2013 receives various information (traffic information, signal information, inter-vehicle distance information, etc.) transmitted from external devices and displays these pieces of information on an information service unit 2012 provided in the vehicle 2001. The information service unit 2012 may also be referred to as an "output unit" that outputs information (or that, for example, outputs information to devices such as a display or a speaker based on PDSCH (or data/information decoded from PDSCH) received by the communication module 2013). In addition, the communication module 2013 stores the information received from the external devices in the memory 2032, to which the microprocessor 2031 has access. Based on the information stored in the memory 2032, the microprocessor 2031 may control the drive unit 2002, the steering unit 2003, the accelerator pedal 2004, the brake pedal 2005, the shift lever 2006, the front wheel 2007, the rear wheel 2008, the axle 2009, the sensors 2021 to 2029, and so forth, mounted in the vehicle 2001.

### (Summary of Embodiments)

As described above, an embodiment of the present invention provides a terminal. This terminal includes: a control unit configured to set non-contiguous frequency-domain resources, the non-contiguous frequency-domain resources including one or more contiguous frequency-domain resources satisfying conditions that are defined or configured in advance; and a communication unit configured to communicate using the non-contiguous frequency-domain resources, and the conditions include a condition relating to at least one of a timing advance group, quasi co-location (QCL), a duplex mode, a numerology, a frequency band, a frequency range, or power control.

The above structure/configuration enables efficient use of non-contiguous frequency-domain resources in wireless communication.

The conditions may include a condition relating to which one of time division duplex, frequency division duplex, sub-band full duplex, or full duplex communication is used as the duplex mode.

The above structure/configuration enables efficient use of non-contiguous frequency-domain resources in wireless communication.

The conditions may include a condition that, in two frequency ranges, obtained by dividing a specific frequency range into two, and a frequency range other than the specific frequency range, identical combinations of frequency ranges are used simultaneously.

The above structure/configuration enables efficient use of non-contiguous frequency-domain resources in wireless communication.

The communication unit may transmit, to a base station, a terminal capability indicating support for a structure of the non-contiguous frequency-domain resources.

The above structure/configuration enables efficient use of non-contiguous frequency-domain resources in wireless communication.

Also, according to an embodiment of the present invention, a base station is provided. This base station includes: a control unit configured to set non-contiguous frequency-domain resources, the non-contiguous frequency-domain resources including one or more contiguous frequency-domain resources satisfying conditions that are defined or configured in advance; and a communication unit configured to communicate using the non-contiguous frequency-domain resources, and the conditions include a condition relating to at least one of a timing advance group, quasi co-location (QCL), a duplex mode, a numerology, a frequency band, a frequency range, or power control.

The above structure/configuration enables efficient use of non-contiguous frequency-domain resources in wireless communication.

Also, according to an embodiment of the present invention, a communication method to be executed by a terminal is provided. The communication method includes: a step of setting non-contiguous frequency-domain resources, the non-contiguous frequency-domain resources including one or more contiguous frequency-domain resources satisfying conditions that are defined or configured in advance; and a step of communicating using the non-contiguous frequency-domain resources, and the conditions include a condition relating to at least one of a timing advance group, quasi co-location (QCL), a duplex mode, a numerology, a frequency band, a frequency range, or power control.

The above structure/configuration enables efficient use of non-contiguous frequency-domain resources in wireless communication.

### (Notes on Embodiments)

Example embodiments of the present invention have been described above, but the disclosed invention is not limited to the above embodiments, and those skilled in the art would understand that there may be various modified examples, revised examples, alternative examples, substitution examples, and the like. In order to facilitate understanding of the invention, specific numerical values have been used for description, but the numerical values are merely examples, and any suitable values may be used unless otherwise specified. The classification of items in the above description is not essential to the present invention. Matters described as two or more items may be combined if necessary, and a matter described as one item may be applied to another item (as long as there is no contradiction). The boundary between functional units or processing units in a functional block diagram does not necessarily correspond to the boundary between physical parts. Operations of multiple functional units may be performed physically by one component, or an operation of one functional unit may be physically performed by multiple parts. In the processing procedures described in the embodiments, the order of the processes may be changed as long as there is no contradiction. For the sake of convenience of processing description, the base station 10 and the terminal 20 are described using functional block diagrams, but such devices may be implemented by hardware, software, or a combination of these. Software executed by the processor included in the base station 10 according to the embodiments of the present invention and software executed by the processor included in the terminal 20 according to the embodiments of the present invention may be stored in a random access memory (RAM), a flash memory, a read-only memory (ROM), an EPROM, an EEPROM, a register, an hard disk drive (HDD), a removable disk, a CD-ROM, a database, a server, or any other appropriate storage medium.

Furthermore, notification of information is not limited to the embodiments or examples described in the present disclosure and may be provided by using any other method. For example, the notification of information may be provided by physical layer signaling (for example, downlink control information (DCI) or uplink control information (UCI)), higher layer signaling (for example, radio resource control (RRC) signaling, medium access control (MAC) signaling, broadcast information (master information block (MIB), system information block (SIB), etc.), other signals, or a combination thereof. Furthermore, RRC signaling may be referred to as an "RRC message" and may be, for example, an RRC connection setup message, an RRC connection reconfiguration message, or the like.

Each embodiment and example described in the present disclosure may be applied to at least one of long-term evolution (LTE), LTE-advanced (LTE-A), SUPER 3G, IMT-Advanced, 4th generation mobile communication system (4G), 5th generation mobile communication system (5G), 6th generation mobile communication system (6G), x-th generation mobile communication system (xG) (where "x" is an integer, decimal, etc.), future radio access (FRA), new radio (NR), new radio access (NX), future generation radio access, W-CDMA (registered trademark), GSM (registered trademark), CDMA 2000, ultra mobile broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), a system using any other appropriate system, and next generation systems enhanced, modified, created, and defined based on these standards. Furthermore, multiple systems (for example, a combination of at least one of LTE and LTE-A, with 5G) may be combined to be applied.

The order of the processing procedures, the order of the sequences, the order of the flowcharts, and the like of the embodiments and examples described in this specification may be changed, provided that there is no contradiction. For example, the method described in the present disclosure presents elements of various steps with an example order and is not limited to the presented, specific order.

In this specification, a specific operation to be performed by the base station 10 may be performed by its upper node in some cases. In a network including one or more network nodes including the base station 10, various operations performed for communication with the terminal 20 can be obviously performed by at least one of the base station 10 and any network node (for example, an MME, an S-GW, and so forth, but these are by no means limiting) other than the base station 10. Cases have been shown above in which there is one network node other than the base station 10. The one network node may be a combination of multiple other network nodes (for example, MME and S-GW).

Information, a signal, or the like described in the present disclosure may be output from a higher layer to a lower layer (or from a lower layer to a higher layer). Information, a signal, or the like described in the present disclosure may be input and output via multiple network nodes.

Input and output information and the like may be stored in a specific place (for example, a memory) or may be managed by using a management table. Input and output information and the like may be overwritten, updated, or additionally written. Output information and the like may be deleted. Input information and the like may be transmitted to other devices.

The determination in the present disclosure may be made in accordance with a value (0 or 1) represented by one bit, may be made in accordance with a Boolean value (Boolean: true or false), or may be made by a comparison of numerical values (for example, a comparison with a predetermined value).

Software should be broadly interpreted to mean a command, a command set, a code, a code segment, a program code, a program, a subprogram, a software module, an application, a software application, a software package, a routine, a subroutine, an object, an executable file, an execution thread, a procedure, a function, and the like, regardless of whether software is called "software," "firmware," "middleware," a "microcode," a "hardware description language," or any other name.

Furthermore, software, commands, information, and the like may be transmitted and received via a transmission medium. For example, when software is transmitted from a web site, a server, or any other remote source using a wired technology (such as a coaxial cable, a fiber optic cable, a twisted pair, or a digital subscriber line (DSL)) and a radio technology (such as infrared rays or a microwave), at least one of these wired technology and radio technology is included in a definition of a transmission medium.

Information, signals, and the like described in the present disclosure may be expressed using any one of a variety of techniques. For example, data, instructions, commands, information, signals, bits, symbols, chips, and the like, which are mentioned throughout the above description, may be expressed by voltages, currents, electromagnetic waves, magnetic fields or magnetic particles, optical fields or photons, or any combination thereof.

The terms described in the present disclosure and the terms necessary for understanding the present disclosure may be replaced with terms having the same or similar meanings. For example, at least one of a channel and a symbol may be a signal (signaling). Furthermore, a signal may be a message. Furthermore, a component carrier (CC) may be referred to as a "carrier frequency," a "cell," a "frequency carrier," or the like.

The terms "system" and "network" used in the present disclosure are interchangeable.

Furthermore, the information, parameters, and the like described in the present disclosure may be expressed by using absolute values, may be expressed by using relative values from predetermined values, or may be expressed by using any other corresponding information. For example, radio resources may be indicated by indices.

The names used for the above-described parameters are not limited names in any point of view. Furthermore, mathematical formulas or the like using the parameters may be different from those explicitly disclosed in the present disclosure. Since various channels (for example, PUCCH, PDCCH, etc.) and information elements can be identified by any suitable names, various names assigned to the various channels and the information elements are not limited names in any point of view.

In the present disclosure, the terms "base station (BS)," "radio base station," "base station device," "fixed station," "NodeB," "eNodeB (eNB)," "gNodeB (gNB)," "access point," "transmission point," "reception point," "transmission/reception point," "cell," "sector," "cell group," "carrier," "component carrier," and the like can be used interchangeably. The base station may also be referred to as by a term such as a "macrocell," a "small cell," a "femtocell," and a "picocell."

The base station can accommodate one or more (for example, three) cells. In a case in which the base station accommodates multiple cells, the entire coverage area of the base station can be partitioned into a plurality of small areas, and each small area can provide a communication service through a base station subsystem (for example, a small indoor base station (RRH: Remote Radio Head)). The term "cell" or "sector" refers to the whole or a part of the coverage area of at least one of the base station and the base station subsystem that performs a communication service in the coverage.

In the present disclosure, when a base station transmits information to a terminal, this may be interpreted as meaning that the base station controls or sends a command to the terminal based on the information.

In the present disclosure, the terms "mobile station (MS)," "user terminal," "user equipment (UE)," "terminal," and the like can be used interchangeably.

The mobile station may be referred to, by a person ordinarily skilled in the art, as a "subscriber station," a "mobile unit," a "subscriber unit," a "wireless unit," a "remote unit," a "mobile device," a "wireless device," a "wireless communication device," a "remote device," a "mobile subscriber station," an "access terminal," a "mobile terminal," a "wireless terminal," a "remote terminal," a "handset," a "user agent," a "mobile client," a "client," or some other suitable terms.

At least one of the base station and the mobile station may be also referred to as a "transmission device," a "receiving device," a "communication device," or the like. At least one of the base station and the mobile station may be a device installed in a mobile body, a mobile body itself, or the like. The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

Furthermore, the base station in the present disclosure may be replaced by the user terminal. For example, various embodiments and examples of the present disclosure may be applied to a configuration in which communication between the base station and the user terminal is replaced by communication between multiple terminals 20 (such communication may be referred to as "device-to-device (D2D)" communication, "vehicle-to-everything (V2X)" communication, etc.). In this case, the terminals 20 may have and perform the functions that the base station 10 described above has/performs. The phrases "uplink" and "downlink" may also be replaced with phrases corresponding to terminal-to-terminal communication (for example, "side"). For example, an uplink channel, a downlink channel, or the like may be replaced with a "side channel."

Similarly, the user terminal in the present disclosure may be replaced with the base station. In this case, the base station may have the functions of the above-described user terminal.

The terms "determination (determining)" and "decision (determining)" used in the present specification may include various types of operations. The "determination" and "decision" may include deeming "judging," "calculating," "computing," "processing," "deriving," "investigating," "looking up (for example, searching in a table, a database, or another data structure)," "searching," "inquiring," or "ascertaining" as "determining" and/or "deciding." Furthermore, the "determination" and "decision" may include deeming "receiving (for example, receiving information)," "transmitting (for example, transmitting information)," "inputting," "outputting," or "accessing (for example, accessing data in a memory)" as "determining" and/or "deciding." Furthermore, the "determination" and "decision" may include deeming "resolving," "selecting," "choosing," "establishing," or "comparing" as "determining" and/or "deciding." Namely, the "determination" and "decision" may include deeming an operation as "determining" and/or "deciding." Furthermore, "determining" may be replaced with "assuming," "expecting," "considering," or the like.

The terms "connected," "coupled," or variations thereof may mean any direct or indirect connection or coupling between two or more elements and may include the presence of one or more intermediate elements between two elements which are "connected" or "coupled." The coupling or the connection between the elements may be physical, logical, or a combination thereof. For example, "connection" may be replaced with "access." In the present disclosure, two elements may be considered to be "connected" or "coupled" with each other using at least one of one or more electric wires, cables and/or a printed electrical connection or using electromagnetic energy having a wavelength in a radio frequency region, a microwave region, or a light (both visible and non-visible) region as non-limiting and non-exhaustive examples.

A reference signal may be abbreviated as "RS" and may be referred to as a "pilot," depending on the standard that is applied.

The phrase "based on" used in the present disclosure does not only mean "based only on," unless otherwise stated. In other words, the phrase "based on" means both "based only on" and "based at least on."

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

Furthermore, "means" in the structure of each of the above devices may be replaced with "unit," "part," "circuit," "device," or the like.

In the case where the terms "include," "including" and variations thereof are used in the present disclosure, these terms are intended to be comprehensive in the same way as the term "comprising." Further, the term "or" used in the present specification is not intended to be an "exclusive or."

A radio frame may include one or more frames in the time domain. In the time domain, each of one or more frames may be referred to as a "subframe." The subframe may further include one or more slots in the time domain. The subframe may have a fixed time length (for example, 1 ms) not depending on numerology.

Numerology may be a communication parameter applied to at least one of transmission and reception of a certain signal or channel. For example, numerology may indicate at least one of subcarrier spacing (SCS), the bandwidth, the symbol length, the cyclic prefix length, the transmission time interval (TTI), the number of symbols per TTI, the radio frame structure, a specific filtering process performed in the frequency domain by a transceiver, a specific windowing process performed in the time domain by a transceiver, and the like.

A slot may include one or more symbols (orthogonal frequency division multiplexing (OFDM) symbols, single carrier frequency division multiple access (SC-FDMA) symbols, etc.) in the time domain. A slot may be a time unit based on numerology.

A slot may include a plurality of mini slots. Each mini slot may include one or more symbols in the time domain. Furthermore, a mini slot may be referred to as a "sub-slot." A mini slot may include fewer symbols than a slot. PDSCH (or PUSCH) that is transmitted in a unit of time greater than a mini slot may be referred to as "PDSCH (or PUSCH) mapping type A." PDSCH (or PUSCH) that is transmitted using a mini slot may be referred to as "PDSCH (or PUSCH) mapping type B."

Any one of a radio frame, a subframe, a slot, a mini slot, and a symbol indicates a time unit for transmitting a signal. As a radio frame, a subframe, a slot, a mini slot, and a symbol, different names corresponding to them may be used.

For example, one subframe may be referred to as a "transmission time interval (TTI)," or a plurality of consecutive subframes may be referred to as a "TTI," or one slot or one mini slot may be referred to as a "TTI." In other words, at least one of the subframe and the TTI may be a subframe (1 ms) in existing LTE, may be a period shorter than 1 ms (for example, 1 to 13 symbols), or may be a period longer than 1 ms. A unit representing the TTI may be referred to as a "slot," a "mini slot," or the like, instead of a "subframe."

Here, for example, the TTI refers to a minimum time unit of scheduling in wireless communication. For example, in an LTE system, the base station performs scheduling of allocating radio resources (frequency bandwidth, transmission power, or the like which can be used in each terminal 20) to each terminal 20 in units of TTIs. The definition of the TTI is not limited thereto.

The TTI may be a transmission time unit such as a channel-coded data packet (transport block), a code block, or a codeword, or may be a processing unit of, for example, scheduling or link adaptation. Furthermore, when a TTI is provided, the time interval (for example, the number of symbols) in which a transport block, a code block, a codeword, or the like is actually mapped may be shorter than the TTI.

When one slot or one mini slot is referred to as a "TTI," one or more TTIs (that is, one or more slots or one or more mini slots) may be a minimum time unit of scheduling. Furthermore, the number of slots (the number of mini slots) forming the minimum time unit of scheduling may be controlled.

A TTI having a time length of 1 ms may be referred to as a "common TTI" (TTI in LTE Rel. 8 to 12), a "normal TTI," a "long TTI," a "common subframe," a "normal subframe," a "long subframe," a "slot," or the like. A TTI shorter than a common TTI may be referred to as a "reduced TTI," a "short TTI," a "partial TTI" (a partial or fractional TTI), a "reduced subframe," a "short subframe," a "mini slot," a "sub slot," a "slot," or the like.

Furthermore, a long TTI (for example, a normal TTI, a subframe, etc.) may be replaced with a TTI having a time length exceeding 1 ms, and a short TTI (for example, a reduced TTI or the like) may be replaced with a TTI having a TTI length that is shorter than a TTI length of a long TTI and that is longer than or equal to 1 ms.

The resource block (RB) is a resource allocation unit in the time domain and the frequency domain and may include one or more consecutive subcarriers in the frequency domain. The number of subcarriers included in an RB may be the same, irrespective of the numerology and may be, for example, 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Furthermore, one or more RBs may be referred to as a "physical resource block (PRB)," a "subcarrier group (SCG)," a "resource element group (REG)," a "PRB pair," an "RB pair," or the like.

Furthermore, a resource block may be formed with one or more resource elements (REs). For example, one RE may be a radio resource field of one subcarrier and one symbol.

A bandwidth part (BWP) (which may be referred to as a "partial bandwidth" or the like) may indicate a subset of consecutive common resource blocks (RBs) for a certain numerology in a certain carrier. Here, a common RB may be specified by an index of an RB based on a common reference point of a carrier. A PRB may be defined in a BWP and numbered in a BWP.

The BWP may include BWP for UL (UL BWP) and BWP for DL (DL BWP). In the terminal 20, one or more BWPs may be configured in one carrier.

At least one of configured BWPs may be active, and UE need not assume that predetermined signals/channels are transmitted and received outside an active BWP. Furthermore, a "cell," a "carrier," or the like in the present disclosure may be replaced with a "BWP."

Structures of the radio frame, the subframe, the slot, the mini slot, and the symbol are merely examples. For example, configurations such as the number of subframes included in a radio frame, the number of slots per subframe or radio frame, the number of mini slots included in a slot, the number of symbols and RBs included in a slot or a mini slot, the number of subcarriers included in an RB, the number of symbols in a TTI, the symbol length, the cyclic prefix (CP) length, and the like can be variously changed.

In the present disclosure, for example, when an article such as "a," "an," or "the" in English is added by a translation, the present disclosure may include a case in which a noun following the article is the plural.

In the present disclosure, "A and B are different" may mean "A and B are different from each other." However, this may also mean "A and B are different from C." Terms such as "separated" or "combined" may be interpreted as well as "different."

Each embodiment or example described in the present disclosure may be used alone, in combination, or may be switched in accordance with the implementation. Furthermore, notification of predetermined information (for example, notification of "being X") is not limited to notification performed explicitly, but may be performed implicitly (for example, not notifying the predetermined information).

Although the present disclosure has been described above in detail, it is obvious to those skilled in the art that the present disclosure is not limited to the embodiment described in the present disclosure. The present disclosure may be implemented as revised and modified embodiments without departing from the gist and scope of the present disclosure as set forth in the accompanying claims. Accordingly, the description of the present disclosure is for the purpose of illustration and does not have any restrictive meaning to the present disclosure.

### DESCRIPTION OF THE REFERENCE NUMERALS

- 10: base station
- 110: transmitting unit
- 120: receiving unit
- 130: configuration unit
- 140: control unit
- 20: terminal
- 210: transmitting unit
- 220: receiving unit
- 230: configuration unit
- 240: control unit
- 1001: processor
- 1002: storage device
- 1003: auxiliary storage device
- 1004: communication device
- 1005: input device
- 1006: output device

## Claims

1. A terminal comprising:
a control unit configured to set non-contiguous frequency-domain resources, the non-contiguous frequency-domain resources including one or more contiguous frequency-domain resources satisfying conditions that are defined or configured in advance; and
a communication unit configured to communicate using the non-contiguous frequency-domain resources,
wherein the conditions include a condition relating to at least one of a timing advance group, quasi co-location (QCL), a duplex mode, a numerology, a frequency band, a frequency range, or power control.

2. The terminal according to claim 1, wherein the conditions include a condition relating to which one of time division duplex, frequency division duplex, sub-band full duplex, or full duplex communication is used as the duplex mode.

3. The terminal according to claim 1, wherein the conditions include a condition that, in two frequency ranges, obtained by dividing a specific frequency range into two, and a frequency range other than the specific frequency range, identical combinations of frequency ranges are used simultaneously.

4. The terminal according to claim 1, wherein the communication unit is further configured to transmit, to a base station, a terminal capability indicating support for a structure of the non-contiguous frequency-domain resources.

5. A base station comprising:
a control unit configured to set non-contiguous frequency-domain resources, the non-contiguous frequency-domain resources including one or more contiguous frequency-domain resources satisfying conditions that are defined or configured in advance; and
a communication unit configured to communicate using the non-contiguous frequency-domain resources,
wherein the conditions include a condition relating to at least one of a timing advance group, quasi co-location (QCL), a duplex mode, a numerology, a frequency band, a frequency range, or power control.

6. A communication method to be executed by a terminal, comprising:
a step of setting non-contiguous frequency-domain resources, the non-contiguous frequency-domain resources including one or more contiguous frequency-domain resources satisfying conditions that are defined or configured in advance; and
a step of communicating using the non-contiguous frequency-domain resources,
wherein the conditions include a condition relating to at least one of a timing advance group, quasi co-location (QCL), a duplex mode, a numerology, a frequency band, a frequency range, or power control.
